# EUROPEAN PATENT APPLICATION

(11) **EP 2 006 822 A2**
(43) Date of publication of application: **24.12.2008**
(21) Application number: 08010751.9
(22) Date of filing: 12.06.2008
(51) Int. Cl.: G09F 3/00

(54) **Tag tape, tag tape roll, RFID circuit element cartridge, and tag label producing apparatus**

(30) Priority: 22.06.2007 JP 2007165501
(71) Applicant: Brother Kogyo Kabushiki Kaisha, Nagoya-shi, Aichi-ken 467-8561 (JP)
(72) Inventor: Yamaguchi, Koshiro, Nagoya-shi, Aichi 4678561 (JP)
(74) Representative: Prüfer & Partner GbR European Patent Attorneys

(57) **Abstract**

A tag tape (101) comprises a plurality of substantially sheet-shaped antenna base (90) wherein an RFID circuit element (To) comprising an IC circuit part (80) and a tag antenna (62) is disposed, and a first tape (110) and a second tape (120) provided opposite each other so that the plurality of antenna base (90) is disposed therebetween, characterized in that the first tape (110) includes an print-receiving layer (101a), the second tape (120) or the first tape (110) includes an affixing adhesive layer (101d) for affixing the plurality of antenna base (90) to the object to be affixed, the second tape (120) includes a separation material layer (101c) on the affixing side of the adhesive layer (101d), that is to be separated at affixing, and the antenna base (90) is provided so that at least the IC circuit part (80) juts toward the separation material layer (101e) side.

## Description

### TECHNICAL FIELD

The present invention relates to a tag tape comprising an RFID circuit element capable of performing information transmission/reception with an external source, for example, a tag tape roll comprising this tag tape, an RFID circuit element cartridge, and a tag label producing apparatus for producing RFID labels using these.

### BACKGROUND ART

An RFID (Radio Frequency Identification) system that transmits and receives information in a non-contact manner (coil based electromagnetic coupling type, electromagnetic induction type, or radio wave type, etc.) to and from an RFID circuit element configured to store information is known.

For example, as such a tag label producing apparatus configured to produce RFID labels with print comprising an RFID circuit element, the apparatus described in JP, A, 2006-297677 is known. In the prior art, a tag tape (print tape) is wound around a tape reel into a roll shape. This tag tape has a layered structure comprising a recording tape wherein an antenna base (film) in which an RFID circuit element (antenna and IC chip) is disposed at a substantially equal interval in the tape longitudinal direction, and a separation tape that is separated from the recording tape at the time the RFID label is affixed. The antenna base is provided between the recording tape and the separation tape.

After the tag tape having such a configuration is fed out and supplied from the tape reel, printing means (print head) comes in contact with the tag tape (specifically, the recording tape) and prints desired print so as to form a tag label tape with print. Then, the tag label tape with print is cut at a desired length, thereby continually producing RFID labels with print. When a RFID label formed in this way is used, RFID tag information is read from or written to the RFID circuit element provided in the antenna base using a separately prepared reader/writer. Subsequently, the separation tape of the RFID label is peeled away so as to expose the back face of the recording tape and affix the entire label to an object to be affixed by the adhesive strength of the tape.

Here, in a case where a tag tape is configured as described above, the antenna base comprising the RFID circuit element exists (locally) in a discontinuous manner in contrast to the recording tape and separation tape that are continuous in the longitudinal direction of the tape shape. As a result, bumps appear in the tag tape at the disposed locations of the antenna base. In the prior art, to avoid effects produced by this bump, the antenna base is unevenly disposed on one side in the width direction of the tag tape. Then, the section of the feeding roller, which comes in contact with and drives the tag tape in coordination with the printing means, that corresponds to the unevenly disposed antenna base is designed with a smaller diameter than the other sections (in other words, is designed with a concave shape).

### DISCLOSURE OF THE INVENTION

### Problem to be Solved by the Invention

In the above prior art, the antenna base is unevenly disposed in the width direction of the tag tape, and the section of the feeding roller corresponding to the antenna base is designed with a concave shape. As a result, pressing force loss or inequality occurs in the tape width direction between the concave section and other sections, making it impossible to apply the pressing force evenly on the printing means side across the entire area in the width direction of the tag tape. That is, good quality printing cannot be achieved across the entire area in the width direction of the tag tape.

It is therefore an object of the present invention to provide a tag tape capable of evenly contacting the printing means substantially across the entire area in the width direction of the tag tape, even at the disposed locations of the antenna base of the tag tape, so as to achieve good quality printing, a tag tape roll comprising this tag tape, an RFID circuit element cartridge comprising this tag tape roll, and a tag label producing apparatus configured to produce RFID labels using these.

A invention for achieving the above object is a tag tape comprising a plurality of substantially sheet-shaped antenna base wherein an RFID circuit element comprising an IC circuit part for storing information and a tag antenna for transmitting/receiving information is disposed, and a first tape and a second tape provided opposite each other so that the plurality of antenna base is disposed therebetween in the tape thickness direction, characterized in that the first tape includes a print-receiving layer formed of a print-receiving material that enables print formation; the second tape or the first tape includes an affixing adhesive layer for affixing the plurality of antenna base to an object to be affixed; the second tape includes a separation material layer on the affixing side of the affixing adhesive layer, that is to be separated at affixing; and the antenna base is provided so that at least the IC circuit part juts toward the separation material layer side.

With the tag tape of the present invention, the antenna base is disposed so that the IC circuit part, etc., juts toward the separation material layer side of the second tape. With this arrangement, when the antenna base is interposed between the first tape and the second tape as described above, the convex section on the tag tape front face at the location of the antenna base occurs on the separation material layer side of the second tape, making it possible to form the print-receiving layer side of the first tape into a flat shape without convex sections occurring on its front face. As a result, when the printing means comes in contact with the print-receiving layer and printing is performed, the occurrence of defects such as thin print spots is prevented, thereby improving print quality. Further, the protrusion dimension of the convex section that occurs on the front face of the separation material layer side can be absorbed by providing the roller side that sandwiches the tag tape in coordination with the printing means with a flexible structure. With such a structure, the disposed locations of the antenna base of the tag tape do not lead to pressing force loss or inequality in the tape width direction between the concave section and other sections as in the case when a convex section is provided on the roller side, making it possible to apply an even pressing force to the printing means side across the entire area in the width direction of the tag tape. As a result, the printing means can evenly contact substantially the entire area in the width direction of the tag tape, even at the disposed locations of the antenna base of the tag tape, thereby making it possible to achieve good quality printing.

### BRIEF DESCRIPTION OF THE DRAWINGS

FIG 1 is a diagram showing the configuration of an RFID label system to which a tag label producing apparatus according to the first embodiment is applied.
FIG 2 is a diagram showing the outer appearance configuration of the tag label producing apparatus.
FIG 3 is a perspective view illustrating the outer appearance configuration of a cartridge holder part in the interior of the apparatus main body, and a cartridge to be loaded thereto, with an upper lid open. Note that FIG 3 is a perspective view from the direction of arrow A in FIG 2 (from the direction viewing the interior of the apparatus main body, from the rear upward direction toward the front downward direction in FIG 2), with a diagram of the upper lid opened upward omitted to avoid illustration complications.
FIG 4 is a diagram that schematically shows the configuration of the main parts of the cartridge holder part of the apparatus main body, and the cartridge loaded thereto.
FIG 5 is a functional block diagram which shows the functional configuration of an RFID circuit element.
FIG 6 is a functional block diagram illustrating the functional configuration of a control system of the tag label producing apparatus.
FIG 7 is a diagram showing a display example during RFID label production.
FIG 8A is a diagram illustrating a configuration example of a tag tape in the tape longitudinal and tape width directions.
FIG 8B is a diagram illustrating a configuration of a tag tape in the tape thickness direction as viewed from the side surface side.
FIG 9A is a top view illustrating an example of a configuration of an RFID label produced from a tag tape. FIG 9B is a side view from the side surface side, and FIG 9C is a cross-sectional view of the IXc-IXc cross-section in FIG. 9B.
FIG 10 is a cross-sectional view of the cross-section X-X in FIG 4 and shows the state when the antenna base is positioned between the print head and the platen roller. The horizontal direction in the figure corresponds to the tape width direction of the tag tape.
FIG 11 is a diagram illustrating a configuration example of an RFID label of a modification wherein the mounting adhesive layer is omitted, and corresponds to the FIG 9B.
FIG. 12 is a diagram illustrating a configuration example of an RFID label of a modification wherein an affixing adhesive layer is provided adjacent to the side opposite the affixing side of the antenna base, and corresponds to the FIG. 9B and FIG. 11.
FIG 13 is a diagram illustrating a configuration example of an RFID label of a modification wherein the thickness dimension of the first tape is made greater than the thickness dimension of the second tape, and corresponds to the FIG 9B, FIG 11, and FIG 12.

### BEST MODE FOR CARRYING OUT THE INVENTION

The following describes an embodiment of the present invention with reference to accompanying drawings.

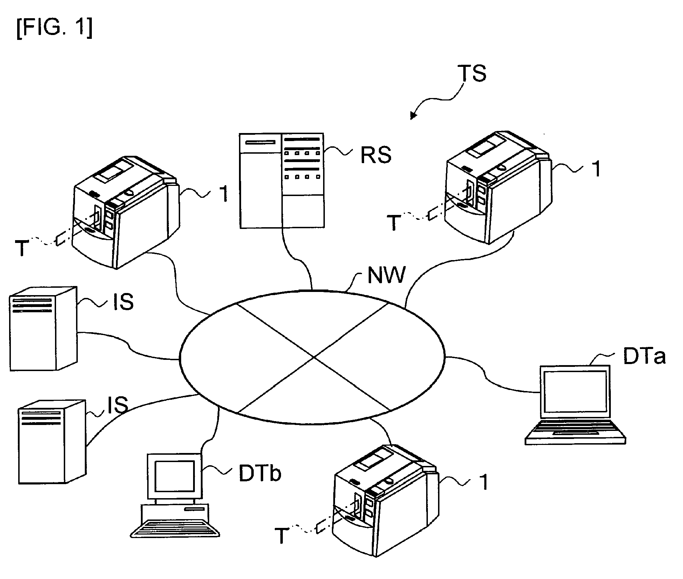

In the RFID label producing system TS shown in FIG 1, the tag label producing apparatus 1 in the present embodiment comprises a route server RS, an information server IS, a terminal apparatus DTa, a general-purpose computer DTb, etc., via a communication network NW comprising a suitable communication line, etc.

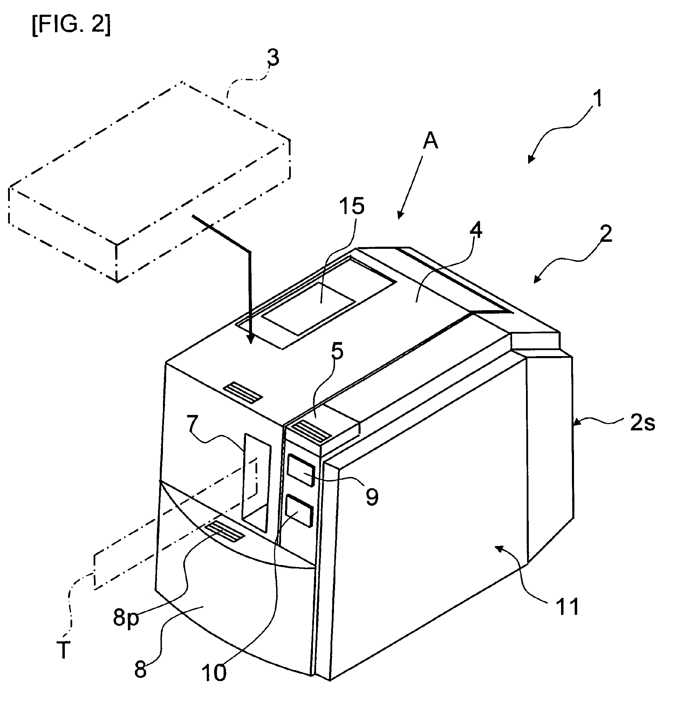

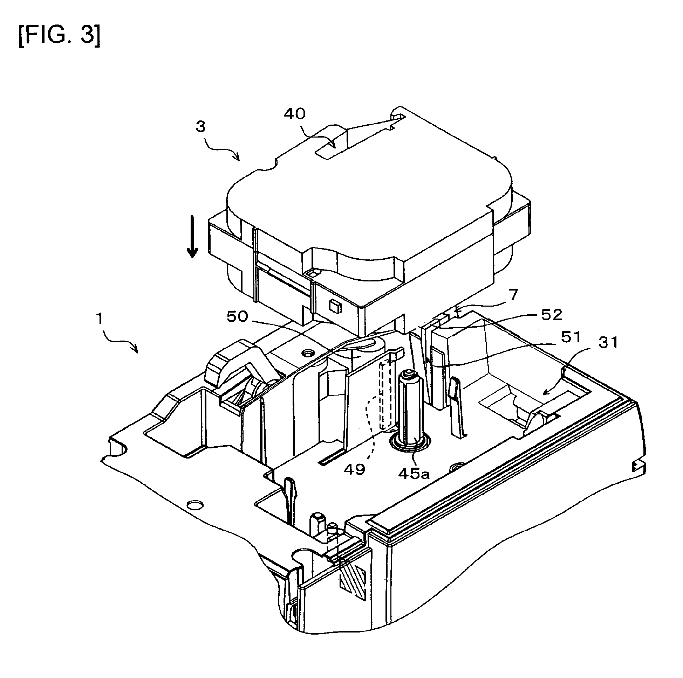

The tag label producing apparatus 1, as shown in FIG 2, comprises an apparatus main body 2, and a cartridge 3 mounted to a cartridge holder part 31 (refer to FIG 3 described later).

The apparatus main body 2 comprises a housing 2s of an overall rectangular shape as an outer shell (comprising an upper surface part, a lower surface part, a front surface part, a rear surface part, and both left and right side surface parts). On the upper surface part are provided an upper lid 4 and an upper lid operation button 5. On the front surface part are provided a label discharging exit 7, a front lid 8, a power button 9, and a cutter driving button 10.

The upper lid 4 is rotatably supported at the end part of the right back side in FIG. 2 of the apparatus main body 2, is biased in the opening direction by a biasing member (not shown), and is lockable with the apparatus main body 2. When the cartridge 3 is removed or installed, the lock is released by pressing the lid operation button 5, the upper lid 4 then opens by the biasing action of the biasing member, and the cartridge 3 is subsequently removed or installed in that state (refer to FIG. 3). Furthermore, on the upper lid 4 is provided an inspection window 15 fit with a transparent cover.

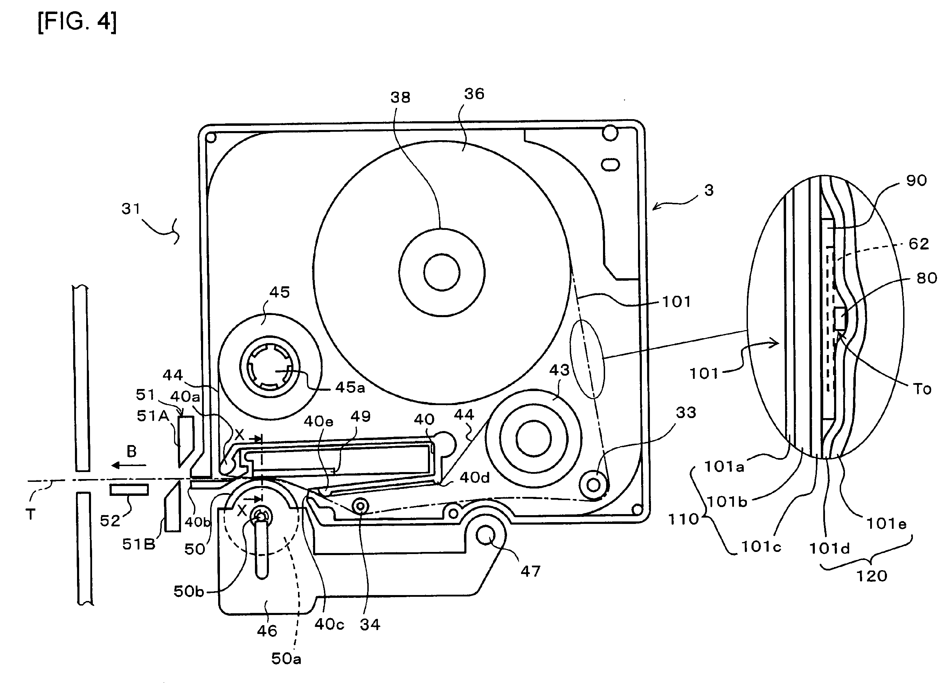

The label discharging exit 7 discharges to the outside an RFID label T formed in the interior of the apparatus main body 2. The front lid 8 can be opened and closed when rotated using the lower end as the fulcrum point, and opens when rotated forward by pressing upward a pressing part 8p provided on the upper end part. The power button 9 is used to turn on and off the main power source of the tag label producing apparatus 1. The cutter driving button 10 is used by the operator to manually operate a cutter 51 described later (refer to FIG 4) and set the RFID label T to a desired length.

As shown in FIG 3, the cartridge 3 has a box shape that is generally formed into a rectangular solid, with a head insertion opening 40 that passes through the front and rear surfaces formed on a part thereof. Further, the cartridge holder part 31 of the side of the apparatus main body 2 is formed into a concave shape into which the cartridge 3 can be loaded and housed. On this cartridge holder part 31 are provided a ribbon take-up roller driving shaft 45a, a print head 49, a platen roller 50, the cutter 51, and an apparatus antenna 52. When the cartridge 3 is loaded to the cartridge holder part 31, the print head 49 is inserted through the head insertion opening 40, and the ribbon take-up roller driving shaft 45a is inserted from the lower surface of the cartridge 3 so as to concentrically fit into a spline shaft hole of a ribbon take-up roller 45 described later (refer to FIG 4).

As shown in FIG 4, the cartridge 3 comprises a tag tape roll 36. The tag tape roll 36 is designed so that a tag tape 101 wherein a plurality of antenna base 90 is serially installed at a predetermined interval in the longitudinal direction is wound around a tag tape reel part (reel member comprising a axis substantially orthogonal to the tape longitudinal direction) 38 to form a roll.

The tag tape 101, in this example, has a five-layer structure (excluding the antenna base 90; refer to the partially enlarged view in FIG 4), comprising an image receiving layer 101 a, a tag tape base layer 101b, an adhesive layer 101c formed of a suitable adhesive material, an adhesive layer 101d formed of a suitable adhesive material, and a separation sheet 101e formed of a paper material. The five layers of the tag tape 101 are layered in that order from the side rolled to the inside of the tag tape roll 36 (the left side in FIG. 4) to the side corresponding to the opposite side (the right side in FIG 4; the affixing side). The image receiving layer 101a is formed as a coated layer of a chemical material on which printing is performed by ink thermal transfer when layered with an ink ribbon 44 described later. The tag tape base layer 101b is formed of a colored PET (polyethylene terephthalate), for example.

Then, the antenna base 90 is provided between the adhesive layer 101c and the adhesive layer 101d at a predetermined interval position in the longitudinal direction of the tag tape 101. On each antenna base 90 is provided an RFID circuit element To comprising a loop antenna 62 configured in a loop coil shape, that transmits and receives information, and an IC circuit part 80.

The antenna base 90 is a thin sheet of a rectangular shape formed of resin, for example. The loop antenna 62 is embedded in the front surface of the outside of the antenna base 90 (the outer peripheral side of the tag tape roll; the right side in FIG 4) so that it is exposed, and the IC circuit part 80 of a rectangular solid shape is connected to the exposed surface of the loop antenna 62. With this arrangement, while the overall shape of the antenna base 90, the IC circuit part 80, and the loop antenna 62 is generally sheet-shaped, the IC circuit part 80 having a rectangular solid shape juts toward the outer front surface of the thin sheet-shaped antenna base 90.

Then, in the interior of the tag tape 101, the adhesive layer 101d and the separation sheet 101e are bonded to the adhesive layer 101c (so as to cover the antenna base 90, the loop antenna 62, and the IC circuit part 80), with one side of the antenna base 90 in contact with the front surface of the adhesive layer 101c. As a result, the adhesive layer 101d and the separation sheet 101e are bonded to each other while curving along the protruding shape of the antenna base 90 and the IC circuit part 80. Then, the tag tape roll 36 is designed so that the tag tape 101 is wound around the tag tape reel part 38 so that the front surface of the protruding side of the IC circuit part 80 of the antenna base 90 appears on the roll radial outer side (roll outer peripheral side; that is, so that the separation sheet 101e appears on the roll outer peripheral side).

On the cartridge 3 are provided an ink ribbon roll 43, the ink ribbon 44 fed out from the ink ribbon roll 43, and the ribbon take-up roller 45 configured to take up the ink ribbon 44 (the ribbon take-up roller driving shaft 45a is fit in the spline shaft hole formed at the axis center thereof and driven thereby). The ribbon take-up roller driving shaft 45a is driven and controlled by a roller driving circuit (not shown).

A separation member 40a is formed on the tape feeding direction downstream side (on the left side in FIG 4) of the print head 49 at the head insertion opening 40. During the printing of the characters, etc., by the print head 49, this separation member 40a, as described later, switches the feeding direction of the ink ribbon 44 that is sandwiched between the platen roller 50 and the print head 49 and pressed against the tag tape 101, and performs an action that separates the ink ribbon 44 from the tag tape 101.

On the cartridge 3 is formed a discharging exit 40b configured to discharge to the outside of the cartridge 3 the tag tape 101 on which characters, etc., have been printed, after the separation of the ink ribbon 44 via the separation member 40a.

A part of the cartridge 3 is visible from the outside through the above-described inspection window 15, when loaded to the cartridge holder part 31. Specifically, on the front surface of the cartridge 3 is provided, for example, a tape type display part (not shown) that displays the tape type, such as the tape width and color, of the tag tape 101. This tape type display part is visible from the outside through the inspection window 15 with the cartridge 3 loaded to the cartridge holder part 31.

The print head 49 formed in the shape of a flat plate is a thermal head comprising a plurality of heating elements disposed in a line. This print head 49 is substantially made of a ceramic having a high degree of hardness, and the head surface
in which the heating elements are arranged is substantially formed into a flat surface. During printing, the ink ribbon 44 and the tag tape 101 are layered and pressed against the head surface (the front surface of the side of the image receiving layer 101a in the tag tape 101 contacts the head surface via the ink ribbon 44). At this time, the heating elements are driven by a print-head driving circuit (not shown) so as to perform printing on the front surface of the image receiving layer 101a of the tag tape 101.

The platen roller 50 is provided in a position opposite the print head 49. This platen roller 50 comprises a roll main body 50a, and a driving shaft 50b provided at the rotational center of the roll main body 50a. The roll main body 50a is formed from a material having a low level of hardness (that is, a material that is flexible and capable of elastic deformation) such as rubber, for example, and has a sufficient thickness dimension in the radial direction from the outer peripheral front surface.

On the cartridge holder part 31, a platen holder 46 is rotatably supported around a holder shaft 47, and the driving shaft 50b of the platen roller 50 is rotatably supported at the free end of the platen holder 46. The platen holder 46 is normally biased in the counterclockwise direction in FIG 4 around the holder shaft 47 by an elastic member (not shown). When printing is performed on the tag tape 101, the platen holder 46 is rotationally driven in the clockwise direction in FIG 4 by a motor (not shown), thereby enabling the platen roller 50 to control the contact with and release from the print head 49. The platen roller 50 is also rotationally driven and controlled by a roller driving circuit (not shown) via the driving shaft 50b (that is, interlocked with the ribbon take-up roller 45).

Further, the cutter 51 (a scissor-type cutter in this example) is arranged on the cartridge holder part 31, adjacent to the discharging exit 40b of the cartridge 3. This cutter 51 comprises a fixed blade 51A and a movable blade 51B. That is, the cutter 51 is connected to a solenoid (not shown). This solenoid is energized by a solenoid driving circuit (not shown), thereby operating the movable blade 51B with respect to the fixed blade 51 A. With this arrangement, the tag tape 101 with print is cut at a predetermined length so as to form the RFID label T.

The apparatus antenna 52 performs the communication for information reading/writing with the RFID circuit element To disposed in the tag tape 101.

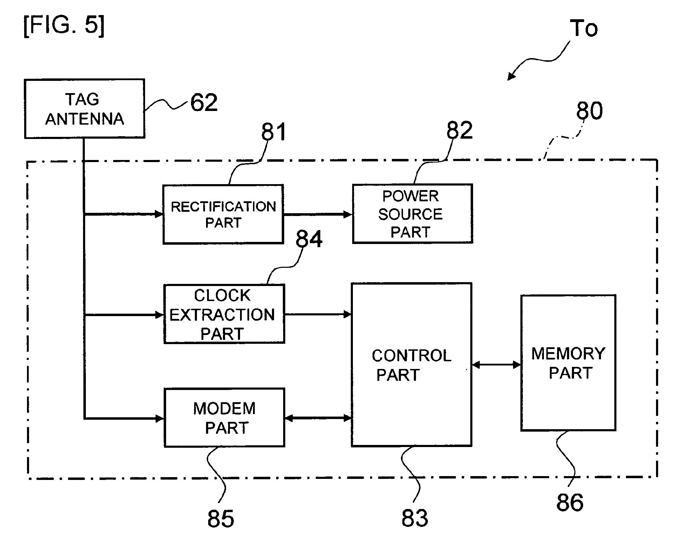

As shown in FIG 5, the RFID circuit element To comprises the IC circuit part 80, and the tag antenna (in this example, the loop antenna) 62 connected thereto.

The IC circuit part 80 comprises a rectification part 81 configured to rectify an interrogation wave received via the tag antenna 62, a power source part 82 configured to store the energy of the interrogation wave thus rectified by the rectification part 81, which serves as a driving power supply, a clock extraction part 84 configured to extract the clock signals from the interrogation wave thus received by the tag antenna 62 and supply the clock signals thus extracted to a control part 83, a memory part 86 configured to store predetermined information signals (such as data related to transmission/reception with the tag label producing apparatus 1), a modem part 85 connected to the tag antenna 62, and the control part 83 configured to control the operation of the RFID circuit element To via the rectification part 86, the clock extraction part 84, the modem part 85, etc.

The modem part 85 demodulates the communication signals from the tag label producing apparatus 1 received by the tag antenna 62, and modulates the interrogation wave received by the tag antenna 62 based on the response signal from the control part 83 and resends that wave as a response wave from the tag antenna 62.

The control part 83 executes basic control, such as interpreting a received signal demodulated by the modem part 85, generating a response signal based on the information signal stored in the memory part 86, and returning the response signal from the modem part 85.

The clock extraction part 84 extracts the clock component from the received signal and extracts the clock to the control part 83, supplying the clock corresponding to the frequency of the clock component of the received signal to the control part 83.

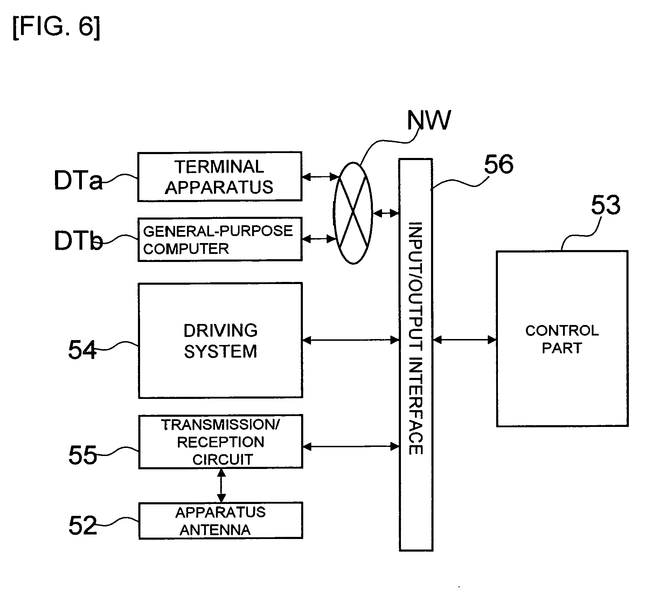

A control system of the tag label producing apparatus 1 is shown in FIG 6. In FIG 6, the tag label producing apparatus 1 is provided with a control part 53 comprising a microprocessor, etc., for example. The control part 53 is connected to the communication line NW which is connected to the aforementioned terminal apparatus DTa, and the general-purpose computer DTb via the input/output interface 56.

The input/output interface 56 is connected to a driving system 54 comprising the roller driving circuit of the cartridge holder part 31, the print-head driving circuit, and the solenoid driving circuit, and a transmission/reception circuit 55 connected to the apparatus antenna 52.

In the above, the greatest feature of the present embodiment is that the antenna base 90 is provided in the tag tape 101 with the IC circuit part 80 protruding toward the side of the separation sheet 101e. The operation and action of the tag label producing apparatus 1 that employs this tag tape 101 will now be described step by step.

First, in FIG 4, with the cartridge 3 loaded to the cartridge holder part 31, the tag tape 101 fed out from the tag tape roll 36 passes between the print head 49 and the platen roller 50 via an opening 40c while guided by two guide rollers 33 and 34. Further, the ink ribbon 44 fed out from the ink ribbon roll 43 is layered on top of the tag tape 101 via the opening 40c while guided and controlled by controlling projection parts 40d and 40e of the cartridge 3, and then passes in that state between the print head 49 and the platen roller 50.

Then, when the power button 9 is pressed so as to activate the main power source, the tag label producing apparatus 1 changes to standby mode. In standby mode, when a tag label production operation is entered using the terminal apparatus DTa, for example, a corresponding instruction signal is inputted to the control part 53 via an input/output interface 56, and tag label production is started by the control of the control part 53.

When tag label production begins, the platen holder 46 is rotationally driven in the clockwise direction in FIG 4 so that the platen roller 50 presses up against the print head 49, thereby applying pressure to the tag tape 101 and the ink ribbon 44 held therebetween. With this, the platen roller 50 is rotationally driven by the roller driving circuit (not shown) so as to feed (transport) the tag tape 101 and the ink ribbon 44 toward the downstream side (the left side in FIG. 4). At this time, the heating elements are driven by the print-head driving circuit (not shown), and the ink of the ink ribbon 44 is thermally transferred to the image receiving layer 101a positioned at the front surface in a portion of the side of the print head 49 (the side of the ink ribbon 44) in the tag tape 101 so as to perform printing. By this printing process, the print characters R are printed based on the data entered using the terminal apparatus DTa.

Subsequently, the ink ribbon 44 fed out to the downstream side of the print head 49 is separated from the tag tape 101 via the separation member 40a, and wound up by the ribbon take-up roller 45. Then, the (printed) tag tape 101 fed out to the downstream side of the print head 49 and separated from the ink ribbon 44 is fed out from the discharging exit 40b to the outside of the cartridge 3, passed through the cutter 51, and fed in the direction of arrow B until arrival at a position near (opposite) the apparatus antenna 52.

When the RFID circuit element To of the printed tag tape 101 separated from the ink ribbon 44 arrives at the transport position substantially opposite the apparatus antenna 52 (or near that position so as to enter the communication range), communication for information reading/writing (information transmission/reception) is performed via the apparatus antenna 52. When information writing is performed, corresponding information is written based on the data entered using the terminal apparatus DTa of FIG 1, for example, and when information reading is performed, the read information is displayed on the terminal apparatus DTa, for example. Note that the transport of the tag tape 101 may be stopped for information transmission/reception, or may continue as is while communication is performed.

When information reading/writing by the apparatus antenna 52 ends and the RFID circuit element To advances a predetermined distance, the transport of the tag tape 101 is stopped. Subsequently, the cutter 51 is activated so as to cut the tag tape 101, thereby forming an RFID label T of a predetermined length. In the above series of operations, the feed-out of the tag tape 101 from the tag tape roller 36 and the transport (feeding) of the tag tape 101 are performed by the rotation of the platen roller 50.

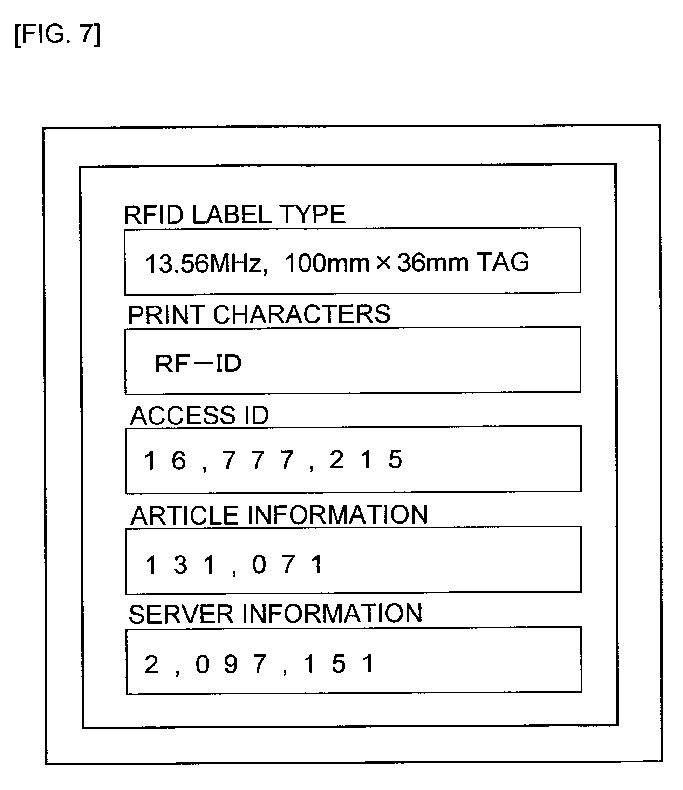

An example of a display on a display screen of the terminal apparatus DTa, when the RFID label T is produced, is shown in FIG 7. In this example, the display includes information such as the type of RFID label T (access frequency and RFID label dimensions), the print characters printed by the print head 49, the access ID which is identification information unique to the RFID circuit element To of the RFID label T, the address of the article information stored in the information server IS of FIG. 1, and the storage destination address of the corresponding information in the route server RS of FIG. 1.

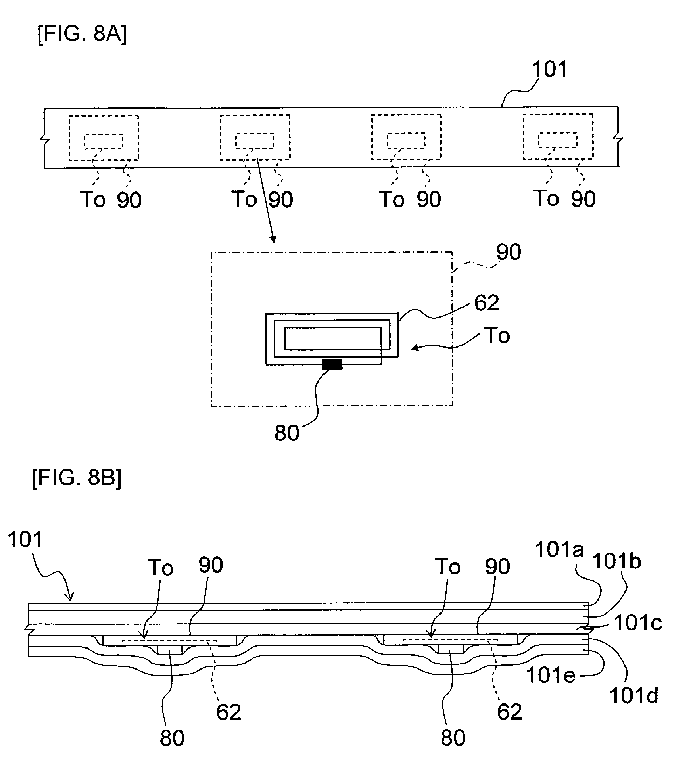

An example of the configuration of the tag tape is shown in FIG 8A and FIG 8B. In these FIGS. 8A and 8B, the tag tape 101 comprises a plurality of RFID circuit elements To disposed (in this example, embedded) at a predetermined interval in the longitudinal direction. The RFID circuit element To comprises the IC circuit part 80 and the loop antenna 62 as described above. In this example, the loop antenna 62 is embedded in the antenna base 90 formed in a sheet shape using suitable synthetic resin material, and the IC circuit part 80 juts so as to connect to the front surface thereof.

Further, as described above, the tag tape 101, excluding the antenna base 90, has a five-layer structure comprising the image receiving layer 101a, the tag tape base layer 101b, the adhesive layer 101c, the adhesive layer 101d, and the separation sheet 101e. The five layers of the tag tape 101 are layered in that order from the front surface side (the upper side in FIG 8B) to the side corresponding to the opposite side (the lower side in FIG 8B; the side affixed to the object to be affixed).

In this example, the antenna base 90 is fixed between the adhesive layer 101c and the adhesive layer 101d. The adhesive layer 101d is used to affix the RFID label T to a target article, etc. The separation sheet 101e functions so as to protect the adhesive layer 101d until it is used for affixing.

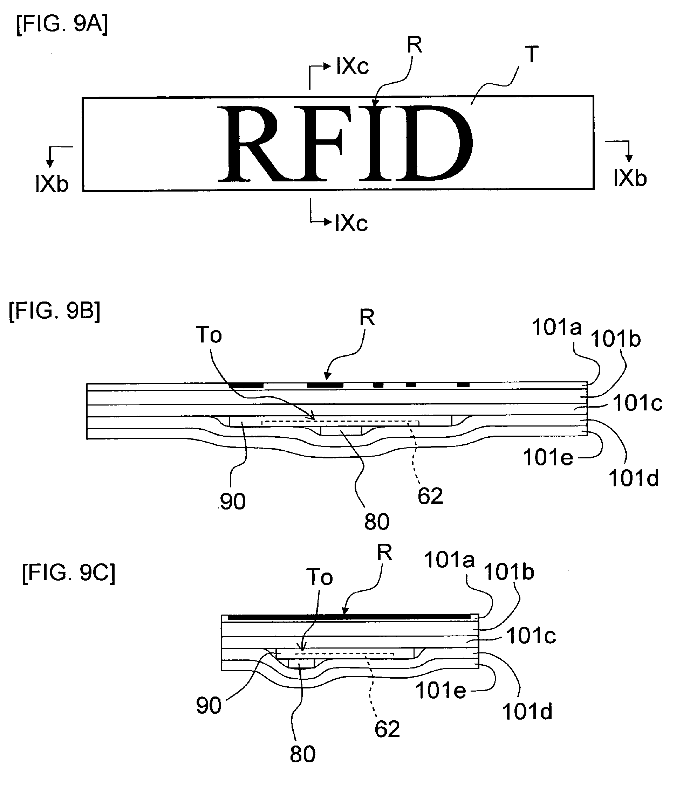

A configuration example of the RFID label T is shown in FIGS. 9A, 9B, and 9C. In these FIGS. 9A to 9C, the RFID label T is formed by cutting the tag tape 101 of the five-layer structure (six-layer structure when including the antenna base 90) at a predetermined or desired length as described above, and then printing is performed on the image receiving layer 101a thereof so that the print characters R (the characters "RF-ID" in the example shown) extend substantially across the tape width direction. As shown in FIG 9C, in the interior of the tag tape 101, the antenna base 90 is provided at the substantially center position in the tape width direction of the tag tape 101.

The state between the print head 49 and the platen roller 50 in the process wherein the RFID label T is formed from the tag tape 101 as described above will now be described.

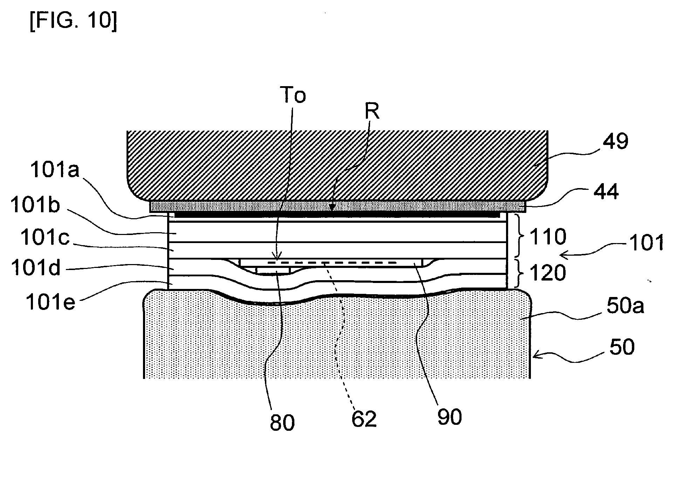

As shown in FIG. 10 and the aforementioned FIG 4, the ink ribbon 44 and the tag tape 101 are held by pressure between the print head 49 positioned on the upper side in FIG 10 and the platen roller 50 positioned on the lower side in FIG 10. In the tag tape 101, the front surface of the side of the image receiving layer 101a (the upper side in the FIG 10) is positioned opposite the head surface of the print head 49, across the ink ribbon 44. The front surface of the separation sheet 101e of the opposite side (the lower side in FIG 10) of the tag tape 101 is disposed so as to come in contact with the outer peripheral surface of the roll main body 50a of the platen roller 50.

Then, in the antenna base 90 provided within the tag tape 101, the flat surface side (the upper side in FIG 10) of the antenna base 90 is positioned opposite the image receiving layer 101a and the head surface of the print head 49, based on the above-described internal positional relationship. The protruding side (the lower side of FIG 10) of the IC circuit part 80, which is the opposite side thereof, is disposed opposite the separation sheet 101e and the outer peripheral surface of the platen roller 50.

Here, in such a disposed state, a first tape 110 that comprises each layer (the image receiving layer 101a, the tag tape base layer 101b, the adhesive layer 101c) and is positioned further on the side of the print head 49 than the antenna base 90 is set between the flat surface of the antenna base 90 and the flat head surface (flat surface formed of metal having a high level of hardness as described above) of the print head 49 so that the tape maintains an overall flat shape.

On the other hand, a second tape 120 that comprises each layer (the second tape 120 including the adhesive layer 101d and the separation sheet 101e) and is positioned further on the side of the plate roller 50 than the antenna base 90 is in a curved state that follows the protruding shape of the IC circuit part 80 (in other words, the convex section of the tag tape 101 front surface at the location of the antenna base 90 occurs on the side of the separation sheet 101e of the second tape 120). Nevertheless, the outer peripheral front surface of the platen roller 50 having a low of hardness (that is, flexibility) as described above absorbs the protrusion dimension by elastic deformation, and presses against the front surface of the second tape 120 with a uniform pressing force across the entire area in the width direction of the tag tape 101.

In the present embodiment, the positional relationship and action of the pressing force described above make it possible to form the image receiving layer 101a of the first tape 110 into a flat shape wherein a convex section does not occur on the front surface. With this arrangement, the platen roller 50 brings the image receiving layer 101a evenly in contact with the head surface of the print head 49 (via the ink ribbon 44) across the entire area in the width direction of the tag tape 101. That is, a pressing force is evenly applied to the side of the print head 49 across the entire area in the width direction of the tag tape 101, without leading to pressing force loss or inequality in the tape width direction between the concave section and other sections as in the case where a concave section is provided on the side of the platen roller 50. As a result, even at the disposed location of the antenna base 90 of the tag tape 101, the print head 49 comes evenly in contact with substantially the entire area in the width direction thereof, making it possible to prevent defects such as thin print spots and achieve good quality printing.

At this time, particularly in the present embodiment, the tag tape base layer 101b provided to the first tape 110 is formed of a PET material as described above, and the separation sheet 101e provided to the second tape 120 is formed of a paper material as described above. With this arrangement, the rigidity of the first tape 110 is reliably greater than the rigidity of the second tape 120. As a result, the convex shape caused by the IC circuit part 80 reliably occurs on the side of the second tape 120 (that is, the front surface of the separation sheet 101e) having a low rigidity, thereby making it possible to form the front surface of the side of the image receiving layer 101a provided in the first tape 110 into a flat shape.

Further, particularly in the present embodiment, the antenna base 90 is provided at the center in the width direction of the tag tape 101, resulting in the formation of the convex section caused by the IC circuit part 80 on the front surface at substantially the center in the tape width direction of the side of the separation sheet 101e of the tag tape 101. With this arrangement, the balance in the width direction of the tag tape 101, as a result of the protrusion dimension absorption action by the platen roller 50 that sandwiches the tag tape 101 in coordination with the print head 49, is relatively favorable. This makes it possible to more reliably apply an even pressing force to the side of the print head 49 across the entire area in the width direction of the tag tape 101. As a result, even at the disposed location of the antenna base 90 of the tag tape 101, the print head 49 evenly contacts substantially the entire area in the width direction, from the center in the width direction of the convex section shape to both ends.

Further, particularly in the present embodiment, the adhesive layer 101d of the second tape 120 is provided adjacent to the affixing side (that is, the side of the separation sheet 101e) of the antenna base 90, making it possible to affix the antenna base 90 and the first tape 110 to the object to be affixed. In such a case, the entire front surface of the affixing side of the adhesive layer 101d can be affixed to the object to be affixed, such as a product, thereby making it possible to affix the RFID label T in the most secure manner.

Further, particularly in the above embodiment, the first tape 110 comprises the adhesive layer 101c adjacent to the side opposite the affixing side of the antenna base 90 (that is, adjacent to the side of the image receiving layer 101a), making it possible to use this adhesive layer 101c to install the antenna base 90 in a predetermined position of the first tape 110. In such a case, the antenna base 90 is installed between the two adhesive layers 101c and 101d, thereby making it possible to install the antenna 90 in the most secure manner.

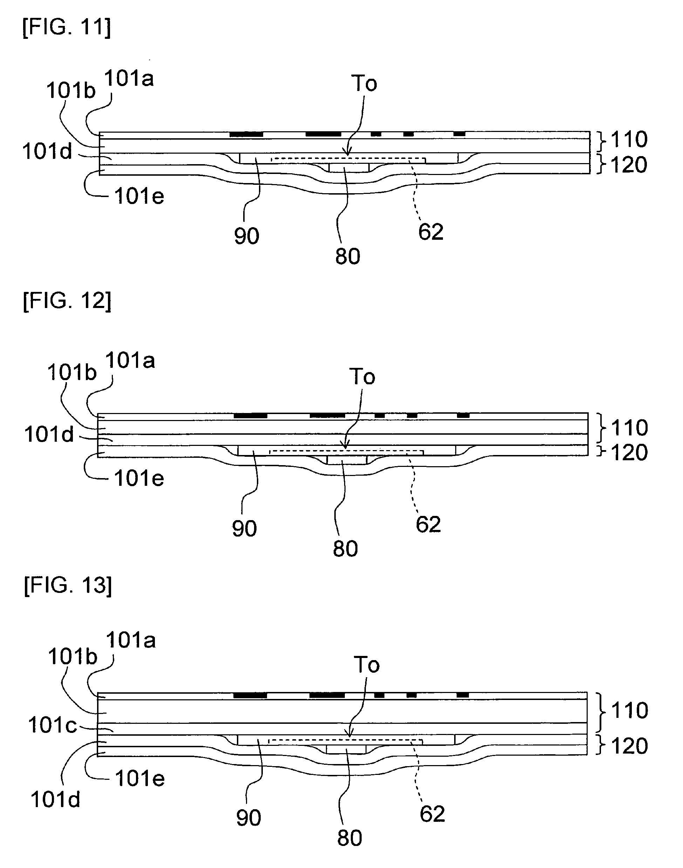

Note that, as shown in FIG. 11, the adhesive layer 101c may be omitted. In such a case, the area of the adhesive layer 101d provided adjacent to the affixing side of the antenna base 90, opposite the antenna base 90, is adhered to the affixing side section of the antenna base 90. Then, the antenna base 90 can be installed to the tag tape base layer 101b so as to cover the area from the outer peripheral side thereof, using the adhesive strength of the area of the adhesive layer 101d that is not opposite the antenna base 90. With this structure, the number of adhesive layers can be decreased further than the above-described case where the adhesive layers 101c and 101d are provided on both the affixing side of the antenna base 90 and the side opposite that side. As a result, the thickness direction dimension of the overall tag tape 101 can be reduced.

Furthermore, as shown in FIG. 12, with the adhesive layer 101c omitted, the first tape 110 may comprise the adhesive layer 101d adjacent to the side opposite the affixing side of the antenna base 90. In such a case, the area of the adhesive layer 101d that is opposite the antenna base 90 is adhered to a section of the side opposite the affixing side of the antenna base 90. Then, the antenna base 90 can be affixed to the object to be affixed so as to cover the area from the outer peripheral side thereof, using the adhesive strength of the area of the adhesive layer 101d that is not opposite the antenna base 90. With this structure, the number of adhesive layers can be decreased further than the above-described case where the adhesive layers 101 c and 101d are provided on both the affixing side of the antenna base 90 and the side opposite that side. As a result, the thickness direction dimension of the overall tag tape 101 can be reduced.

Further, particularly in the above embodiment, the first tape 110 comprises a tag tape base layer 101b having a substantially tape shape, that is provided on the affixing side of the image receiving layer 101 a so as to continually dispose the plurality of antenna base 90 in the tape longitudinal direction at a predetermined interval, thereby making it possible to form the image receiving layer 101a by establishing a coated layer of a print-receiving material on the side opposite the affixing side of the tag tape base layer 101b. Further, the antenna base 90 can be reliably positioned and installed via the adhesive layer 101c, for example, at a predetermined position of the tag tape base layer 101b.

Furthermore, the tag tape base layer 101b of the first tape 110 and the separation sheet 101e of the second tape 120 may be made of the same material (the same paper material, for example). In such a case, as shown in FIG 13, the thickness of the tag tape base layer 101b may be made larger than the thickness of the separation sheet 101b so that the thickness direction dimension of the first tape 110 is greater than the thickness direction dimension of the second tape 120. With this arrangement, the rigidity of the first tape 110 is greater than the rigidity of the second tape 120, thereby achieving the same effect as described above. Further, even in a case where the material of the tag tape base layer 101b of the first tape 110 has a slightly lower rigidity than the material of the separation sheet 101e of the second tape 120, the respective thickness direction dimensions may be set so that the rigidity of the overall first tape 110 is similarly greater than the rigidity of the overall second tape 120.

Further, particularly in the above embodiment, the tag tape 101 provided to the tag tape roll 36 is serially wound around the tag tape reel part 38, based on a positional relationship wherein the second tape 120 comprising the separation sheet 101 e appears on the outer peripheral side of the first tape 110 comprising the tag tape base layer 101b. That is, the tag tape 101 is wound so that the protruding side of the IC circuit part 80 of the antenna base 90 appears on the roll radial outer side. With this arrangement, when the tag tape 101 is fed out from the tag tape roll 36, the first tape 110 comprising the flat image receiving layer 101a appears on the roll inner peripheral side, and the second tape 120 comprising the separation sheet 101e wherein the convex section is formed appears on the roll outer peripheral side. In response, as shown in FIG 4, the print head 49 is provided on the side of the first tape 110 while the platen roller 50 is provided on the side of the second tape 120, thereby making it possible to absorb the protrusion dimension of the convex section on the side of the platen roller 50 as described above, and achieve high-quality printing on the flat front surface of the image receiving layer 101a with the print head 49.

Further, while the above has been described in connection with an illustrative scenario in which the tag tape 101 printed and accessed (subjected to reading/writing) via the RFID circuit element To is cut by the cutter 51 so as to form the RFID label T, the present invention is not limited thereto. That is, the present invention may also be applied to a case where a label mount (a so-called die cut label) separated in advance to a predetermined size corresponding to the label is continuously disposed on the tape fed out from the roll, and the label is not cut by the cutter 51 but rather the label mount (a label mount containing the accessed RFID circuit element To and on which corresponding printing has been performed) only is peeled from the tape after the tape has been discharged from the label discharging exit 7 so as to form the RFID label T.

Further, in the above, a method wherein the ink ribbon 44 is layered on the image receiving layer 101a provided in the tag tape 101, and printing is performed by thermal transfer (the so-called receptor method) is employed. Nevertheless, the present invention is not limited thereto, and a thermal method wherein the tag tape base layer 101b of the tag tape 101 is made using thermal paper, and printing is performed by directly transferring the image onto the front surface thereof from the heating elements of the print head 49 may also be used. In such as case, the image receiving layer 101a is not formed on the first tape 110.

Furthermore, while the above has been described in connection with an illustrative scenario in which the tag tape 101 is wound around a reel member so as to form a roll, and the roll is disposed within the cartridge 3 so as to feed out the tag tape 101, the present invention is not limited thereto. For example, an arrangement can be made as follows. Namely, a long-length or rectangular tape or sheet (including tape cut to a suitable length after being supplied from a roll) in which at least one RFID circuit element To is disposed is stacked (laid flat and layered into a tray shape, for example) in a predetermined housing part so as to form a cartridge. The cartridge 3 is then mounted to the cartridge holder part 31 provided to the side of the tag label producing apparatus 2. Then, the tape or sheet is supplied or fed from the housing part, and printing and writing is performed so as to produce RFID labels.

Furthermore, a configuration wherein the above-described roll is directly removably loaded to the side of the tag label producing apparatus 2, or a configuration wherein a long, flat paper-shaped or strip-shaped tape or sheet is moved one piece at a time from outside the tag label producing apparatus 2 by a predetermined feeder mechanism and supplied to within the tag label producing apparatus 2 is also possible. Additionally, the structure of the roll is not limited to a type that is removable from the tag label producing apparatus 2 main body, such as the cartridge 3, but rather the roll may be provided as a so-called installation type or an integrated type that is not removable from the apparatus main body side. In this case as well, the same effect is achieved.

Additionally, other than those previously described, approaches according to the respective embodiments and exemplary modifications may be utilized in combination as appropriate.

Note that various modifications which are not described in particular can be made according to the present invention without departing from the spirit and scope of the invention.

## Claims

1. A tag tape (101) comprising:
a plurality of substantially sheet-shaped antenna base (90) wherein an RFID circuit element (To) comprising an IC circuit part (80) for storing information and a tag antenna (62) for transmitting/receiving information is disposed; and
a first tape (110) and a second tape (120) provided opposite each other so that said plurality of antenna base (90) is disposed therebetween in the tape thickness direction, **characterized in that**:
said first tape (110) includes a print-receiving layer (101a) formed of a print-receiving material that enables print formation;
said second tape (120) or said first tape (110) includes an affixing adhesive layer (101d) for affixing said plurality of antenna base (90) to an object to be affixed;
said second tape (120) includes a separation material layer (101e) on said affixing side of said affixing adhesive layer (101d), that is to be separated at affixing; and
said antenna base (90) is provided so that at least said IC circuit part (80) juts toward said separation material layer (101e) side.

2. The tag tape (101) according to claim 1, **characterized in that**:
said antenna base (90) is provided at a center portion in the width direction of the tag tape (101).

3. The tag tape (101) according to claim 1 or 2, **characterized in that**:
said second tape (120) includes said affixing adhesive layer (101d) adjacent to the affixing side of said antenna base (90).

4. The tag tape (101) according to claim 3, **characterized in that**:
said first tape (110) includes a mounting adhesive layer (101c) adjacent to the side opposite the affixing side of said antenna base (90).

5. The tag tape (101) according to claim 1 or 2, **characterized in that**:
said first tape (110) includes said affixing adhesive layer (101d) adjacent to the side opposite the affixing side of said antenna base (90).

6. The tag tape (101) according to any one of claims 1 to 5, **characterized in that**:
said first tape (110) includes a substantially tape-shaped tag tape base layer (101b) on the affixing side of said print-receiving layer (101a), that disposes said plurality of antenna base (90) continuously in the tape longitudinal direction at predetermined intervals.

7. The tag tape (101) according to claim 6, **characterized in that**:
a thickness of said first tape (110) is larger than a thickness of said second tape (120).

8. The tag tape (101) according to claim 6 or 7, **characterized in that**:
a rigidity of said first tape (110) is greater than a rigidity of said second tape (120).

9. The tag tape (101) according to claim 8, **characterized in that**:
said tag tape base layer (101b) of said first tape (110) is formed of PET, and
said separation material layer (101e) of said second tape (120) is formed of a paper material.

10. A tag tape roll (36) comprising the tag tape (101) according to claim 1,
**characterized in that**:
said tag tape (101) is wound around an axis substantially orthogonal to the longitudinal direction of said tag tape (101).

11. The tag tape roll (36) according to claim 10, **characterized in that**:
said tag tape (101) includes said antenna base (90) at a center portion in the width direction of the tag tape (101).

12. The tag tape roll (36) according to claim 10 or 11, further comprising a reel member (38) including said axis, **characterized in that**:
said tag tape (101) is wound in order around said reel member (38), based on a positional relationship whereby said second tape (120) appears on the outer peripheral side of said first tape (110).

13. The tag tape roll (36) according to claim 12, **characterized in that**:
said tag tape (101) is wound so that the protruding side of said IC circuit part (80) of said antenna base (90) appears on the roll radial outer side.

14. An RFID circuit element cartridge (3) comprising a tag tape roll (36) winding the tag tape (101) according to claim 1, **characterized in that**:
said RFID circuit element cartridge (3) is detachably provided to a tag label producing apparatus (1).

15. The RFID circuit element cartridge (3) according to claim 14, **characterized in that**:
said tag tape (101) includes said antenna base (90) at a center portion in the width direction of the tag tape (101).

16. A tag label producing apparatus (1) for producing RFID labels (T) by using the tag tape (101) according to claim 1, comprising:
a roll installation part (31) for installing a tag tape roll (36) winding said tag tape (101);
a feeding roller (50) for feeding said tag tape (101) supplied from said tag tape roll (36) mounted to said roll installation part (31);
printing means (49) for printing predetermined print on a print-receiving layer (101a) of said first tape (110); and
communication means (52) for transmitting/receiving information via wireless communication with said RFID circuit element (To) provided to said antenna base (90).

17. The tag label producing apparatus (1) according to claim 16, **characterized in that**:
said roll installation part (31) installs said tag tape roll (36) winding said tag tape (101) wherein said antenna base (90) is provided at a center portion in the width direction of the tag tape (101).

18. The tag label producing apparatus (1) according to claim 16 or 17, **characterized in that**:
said roll installation part (31) is a cartridge holder part (31) that enables installation and removal of an RFID circuit element cartridge (3) comprising said tag tape roll (36).

19. The tag label producing apparatus (1) according to any one of claims 16 to 18,
**characterized in that**:
said feeding roller (50) includes a platen roller (50) provided opposite said printing means (49), across said tag tape (101).

20. The tag label producing apparatus (1) according to claim 19, **characterized in that**:
said platen roller (50) includes a driving shaft (50b) and a roll main body (50a) that is installed on said driving shaft (50b) so as to come in contact with said tag tape (101) and is formed of a flexible material capable of absorbing a jutting dimension portion of said IC circuit part (80) of said antenna base (90).
